# EUROPÄISCHE PATENTSCHRIFT

(11) **EP 1 925 351 B1**
(45) Veröffentlichungstag und Bekanntmachung des Hinweises auf die Patenterteilung: **15.04.2009**
(21) Anmeldenummer: 06023831.8
(22) Anmeldetag: 16.11.2006
(51) Int. Cl.: B01D 25/00, B01D 25/176

(54) **Filterelement für eine Filterpressenplatte**
Filterelement for filterpress plate
Élément de filtration pour un plateau filtrant de presse

(43) Veröffentlichungstag der Anmeldung: 28.05.2008
(73) Patentinhaber: Sefar AG, 8803 Rüschlikon (CH)
(72) Erfinder: Gaiser Rick, NY 14043 Depew (US); Maurer, Christoph, 8803 Rüschlikon (CH); Dür, Hansjörg, 8803 Rüschlikon (CH)
(74) Vertreter: Wunderlich, Rainer

(56) Entgegenhaltungen:
- WO-A-01/89657
- WO-A-95/07743
- DE-C1- 10 156 199
- GB-A- 2 088 231

## Beschreibung

Die Erfindung betrifft ein Filterelement für eine Filterpressenplatte gemäß dem Oberbegriff des Anspruchs 1. Ein solches Filterelement ist unter anderem ausgebildet mit zwei Filterbereichen und einem Durchgang zum Durchleiten einer zu filtrierenden Flüssigkeit, über den die beiden Filterbereiche miteinander verbunden sind.

Filterpressenplatten für Plattenfilterpressen sind bekannt. Derartige Filterpressenplatten weisen eine in der Regel mittig angeordnete Durchflussöffnung auf, die zum Durchgang der zu filtrierenden Flüssigkeit dient. In der Plattenfilterpresse werden mehrere Filterpressenplatten derart nebeneinander angeordnet und verpresst, dass die Durchflussöffnungen fluchten und einen Kanal bilden, über den zu filtrierende Flüssigkeit in den Filter zugeführt wird.

Zur Befestigung der Filterbereiche im Bereich der Durchflussöffnung ist beispielsweise aus der US 6,932,906 B2 und der WO 01/89657 A1 ein flexibles Durchgangsrohr bekannt. An seinen gegenüberliegenden Stirnseiten weist das bekannte Durchgangsrohr jeweils einen Flansch auf, an dem ein Filterbereich angeordnet ist.

Zum Einbau eines bekannten Filterelementes in einer Filterpressenplatte ist es erforderlich, einen der beiden Filterbereiche durch die Durchflussöffnung der Filterpressenplatte hindurchzuschieben und/oder hindurchziehen, wobei der andere Filterbereich hinter der Durchflussöffnung zurück bleibt. Um dabei das Durchgangsrohr mit seinen Flanschabschnitten in der Durchflussöffnung positionieren zu können, wird dieses beim Hindurchschieben beziehungsweise Hindurchziehen deformiert.

Bei der Montage des bekannten Filterelementes ist es somit erforderlich, zumindest einen Filterbereich so weit zusammenzufalten, zusammenzurollen oder anderweitig zu komprimieren, dass dieser durch die Durchflussöffnung hindurchpasst. Insbesondere bei großflächigen und/oder weniger flexiblen Filterbereichen kann dieses Vorgehen relativ aufwändig sein.

Aus der WO 95/07743 A1 sind verschiedene Filterelementbefestigungen für Filterpressen bekannt. Insbesondere lehrt die WO 95/07743 A1 zwei flanschartige Elemente vorzusehen, an denen jeweils ein Filtertuch angeordnet ist, und diese über gewindeartige Elemente miteinander zu verbinden.

Weitere Filterelementbefestigungen mit verbindbaren Flanschelementen sind aus der DE 101 56 199 C1 und der GB 2 088 231 A bekannt.

**Aufgabe** der Erfindung ist es, ein Filterelement für eine Filterpressenplatte anzugeben, das bei hoher Zuverlässigkeit und Wirtschaftlichkeit besonders einfach an einer Filterpressenplatte montiert werden kann.

Die Aufgabe wird erfindungsgemäß durch ein Filterelement mit den Merkmalen des Anspruchs 1 gelöst. Bevorzugte Ausführungsbeispiele sind in den abhängigen Ansprüchen angegeben.

Nach einem Aspekt der Erfindung ist bei einem Filterelement vorgesehen, dass der Durchgang modular mit zumindest zwei separaten Flanschelementen ausgebildet ist, wobei jedes der Flanschelemente eine Durchgangsöffnung für die zu filtrierende Flüssigkeit aufweist und wobei an den Flanschelementen jeweils einer der beiden Filterbereiche angeordnet ist, und dass Verbindungsmittel vorgesehen sind, mit welchen die beiden Flanschelemente bei fluchtenden Durchgangsöffnungen miteinander verbunden sind.

Ein Grundgedanke der Erfindung kann darin gesehen werden, den Durchgang mehrteilig mit zumindest zwei separaten Elementen auszubilden, wobei an jedem Element jeweils einer der beiden Filterbereiche befestigt ist. Die Elemente sind dabei über Verbindungsmittel miteinander verbindbar. Eine derartige Anordnung ermöglicht es, den Durchgang erst vor Ort bei der Montage des Filterelementes an der Filterpressenplatte zusammenzufügen, das heißt die beiden Filterbereiche erst bei der Montage des Filterelementes an der Filterpressenplatte mittels des Durchganges miteinander zu verbinden. Somit ist es beim Anbringen des Filterelementes nicht erforderlich, einen der beiden Filterbereiche durch die Filterpressenplatte hindurchzuführen, so dass eine besonders einfache und wirtschaftliche Montage gegeben ist. Insbesondere ist kein aufwändiges Falten eines der Filterbereiche erforderlich und eventuell mit dem Falten und/oder Durchführen des Filterbereiches einhergehende Beschädigungen desselben werden vermieden.

Die Verbindungsmittel sind geeigneterweise so ausgebildet, dass sie eine Verbindung der beiden Flanschelemente ohne Werkzeugeinsatz erlauben. Vorzugsweise sind die Verbindungsmittel so ausgeführt, dass eine Verbindung zwischen den beiden Flanschelementen durch relative Bewegung der Flanschelemente zueinander, insbesondere durch Zusammendrücken und/oder Verdrehen hergestellt werden kann. Die Verbindungsmittel können beispielsweise für eine kraftschlüssige und/oder eine formschlüssige Verbindung vorgesehen sein.

Erfindungsgemäß ist es, dass die Verbindungsmittel ein Verbindungsrohr aufweisen, an dem die beiden Flanschelemente angeordnet sind. Gemäß diesem Erfindungsgedanken ist der Durchgang mit einem weiteren Element, dem Verbindungsrohr, ausgebildet, an dem einerseits das erste Flanschelement und andererseits das zweite Flanschelement befestigt ist, so dass die beiden Flanschelemente über das Verbindungsrohr miteinander verbunden sind. Zusätzlich oder alternativ können die Verbindungsmittel Elemente für eine unmittelbare Verbindung zwischen den beiden Flanschelementen aufweisen. Ein Verbindungsrohr kann insbesondere zur Kompensation von Durchmesser- und/oder Dickenunterschieden der Filterpressenplatte dienen. Insbesondere erlaubt es ein Verbindungsrohr, das Filterelement in einfacher Weise an verschiedene Plattendicken anzupassen. So können die Verbindungsmittel beispielsweise so ausgebildet sein, dass die Flanschelemente unter unterschiedlichem Abstand zueinander am Verbindungsrohr befestigt werden können. Erfindungsgemäß sind außenseitig am Verbindungsrohr und an den Flanschelementen eine Vielzahl von Rasteinrichtungen vorgesehen, welche die Flanschelemente bei unterschiedlichem Abstand zueinander am Verbindungsrohr halten. Weiterhin ist nach der Erfindung am Verbindungsrohr zumindest ein Anschlag, insbesondere ein Anschlagring, vorgesehen, der eine Relativbewegung zumindest eines Flanschelementes bezüglich dem Verbindungsrohr begrenzt.

Vorteilhaft ist es, dass ein überstehender Abschnitt des Verbindungsrohres, der aus einem oder beiden Flanschelementen heraussteht, beispielsweise durch Abschneiden, entfernt ist.

Das Verbindungsrohr kann auch eine variable Baulänge aufweisen, um unterschiedliche Dicken in der Filterpressenplatte auszugleichen. Hierzu kann das Verbindungsrohr beispielsweise ein flexibles Material aufweisen und/oder balgartig ausgebildet sein.

Bevorzugt sind die Verbindungsmittel so ausgebildet, dass die beiden Flanschelemente, insbesondere in einer definierten Drehposition, drehfest miteinander verbunden sind. Dies ermöglicht eine gerichtete Montage der beiden Filterbereiche, bei der diese von Anfang an ohne Winkelversatz in ihrer gewünschten Position angeordnet sind, in der sie insbesondere die Filterpressenplatte möglichst gut abdecken. Zum Herstellen der definierten Drehposition weisen die Verbindungsmittel geeigneterweise zumindest ein Positionierelement auf. Bei dem Positionierelement kann es sich beispielsweise um einen axial verlaufenden Vorsprung und/oder eine axial verlaufende Nut handeln, die an einem der Flanschelemente und/oder am Verbindungsrohr vorgesehen ist, und die mit einem korrespondierenden Element am benachbarten Flanschelement und/oder am benachbarten Verbindungsrohr in Eingriff steht. Ein solches zusätzliches Positionierelement ist insbesondere dann von Vorteil, wenn die verbindungsmittel einen solchen Schnappverschluss aufweisen, der grundsätzlich eine Verdrehung der beiden Flanschelemente gegeneinander zulassen würde. Um ein nachträgliches Ausrichten der Filterbereiche zu gewährleisten kann aber grundsätzlich auch vorgesehen sein, dass die beiden Flanschelemente relativ zueinander drehbar sind.

Es ist erfindungsgemäß, dass die Flanschelemente radial außenseitig am Verbindungsrohr angeordnet sind. Gemäß diesem Aspekt sind die Flanschelemente über das Verbindungsrohr aufgeschoben. Ein Durchgangskanal durch den Durchgang kann in diesem Fall durch eine Innenwand des Verbindungsrohres gebildet sein, das heißt die Innenwand des Verbindungsrohres steht in Kontakt mit der durch den Durchgang fließenden Flüssigkeit. Die Innenwände der Flanschelemente liegen dabei am Verbindungsrohr an.

Alternativ ist es aber auch möglich, dass der Durchgangskanal sowohl von der Innenwand des Verbindungsrohres als auch von den Innenwänden des Flanschelementes gebildet wird. Um ein besonders homogenes Strömungsbild zu erhalten, ist es dabei vorteilhaft, dass die Innenwände der Flanschelemente zumindest bereichsweise mit der Innenwand des Verbindungsrohres fluchten. Gemäß dieser Ausführungsform sind im Querschnitt des Durchgangskanals beim Übergang vom Kanalbereich, der durch die Flanschelemente gebildet wird, zu dem Kanalbereich, der durch das Verbindungsrohr gebildet wird, keine Sprünge gegeben, so dass der Strömungswiderstand besonders niedrig ist.

Die Verbindungsmittel könnten beispielsweise einen Schraubverschluss oder einen Bajonettverschluss aufweisen, der durch Drehung in eine gesicherte Position gebracht werden kann und durch Gegendrehung gelöst werden kann. Erfindungsgemäß ist es jedoch, dass die Verbindungsmittel zumindest einen Schnappverschluss aufweisen. Der Schnappverschluss ist erfindungsgemäß für eine Verbindung der Flanschelemente mit dem Verbindungsrohr ausgebildet, kann aber auch für eine Verbindung der Flanschelemente untereinander ausgebildet sein. Vorzugsweise weist der Schnappverschluss zumindest ein deformierbares und/oder bewegliches Profilelement auf, das in einer korrespondieren Vertiefung aufgenommen ist. Beispielsweise kann zumindest ein ringförmiges Profilelement vorgesehen sein. Es ist aber besonders bevorzugt, das als Schnappelement ausgebildete Profilelement und insbesondere auch die korrespondierende Vertiefung in ihrer Breite schmal verglichen mit dem Umfang des Durchgangs auszubilden. Hierdurch kann eine besonders hohe Dichtigkeit gewährleistet werden. Beispielsweise kann das Schnappelement und insbesondere auch die korrespondierende Vertiefung segmentartig ausgebildet sein. Vorzugsweise sind am Umgang des Durchganges mehrere segmentartige Profilelemente und/oder Vertiefungen vorgesehen. Erfindungsgemäß sind, bevorzugt in einem Segment, jeweils mehrere Profilelemente und/oder Vertiefungen axial versetzt übereinander vorgesehen. Es können auch mehrere Segmente vorgesehen sein. Alternativ oder zusätzlich zu Schnappelementen und/oder Vertiefungen, die sich entlang eines Teilbereichs des Umfanges der Flanschelemente und/oder des Verbindungsrohres erstrecken, können auch ringförmige Schnappelemente beziehungsweise Vertiefungen vorgesehen sein, die den gesamten Umfang umlaufen.

Geeigneterweise ist das Profilelement des Schnappverschlusses biegbar als Biegeschnappelement ausgebildet. Insbesondere kann der Schnappverschluss zumindest ein radial wirkendes Biegeschnappelement aufweisen. Hierunter kann insbesondere ein solches Element verstanden werden, das durch Biegung radial bezüglich des im Durchgang ausgebildeten Durchgangskanals bewegt werden kann. Grundsätzlich sind auch tangential wirkende Schnappelemente denkbar.

Vorteilhafterweise sind die Verbindungsmittel, insbesondere das Schnappverschlusselement, so ausgestaltet, dass ein zerstörungsfreies Lösen der Verbindung zwischen den beiden Flanschelementen möglich ist. Dies kann durch Wahl eines geeigneten Winkels am Schnappelement gegeben sein. Hierdurch wird eine besonders einfache Demontage des Filterelementes von der Filterpressenplatte ermöglicht. Zur Demontage kann der Durchgang auch zumindest bereichsweise nachgiebig ausgebildet sein.

Eine weiteres Merkmal der Erfindung besteht darin, dass der Schnappverschluss eine Vielzahl von axial versetzten Profilelementen aufweist, die radial innen an zumindest einem der Flanschelemente und radial außen am Verbindungsrohr angeordnet sind. Eine derartige Ausführungsform erlaubt es, das Flanschelement an einer Vielzahl von Axialpositionen festzulegen. Dies wiederum ermöglicht es, die Länge des Durchganges an die Dicke der Filterpressenplatte anzupassen.

Grundsätzlich könnte beispielsweise vorgesehen sein, dass zumindest eines der Flanschelemente stirnseitig am Verbindungsrohr angeordnet ist und insbesondere scheibenförmig ausgebildet ist. Insbesondere in diesem Fall ist eine besonders zuverlässige Verbindung dadurch gegeben, dass der Rastverschluss zumindest ein stirnseitig am Verbindungsrohr angeordnetes Profilelement aufweist, das bevorzugt durch eines der Flanschelemente durchsteht. Geeigneterweise steht das Profilelement in Axialrichtung am Verbindungsrohr vor.

Besonders vorteilhaft ist es, dass der Durchgang gegen einen radialen Flüssigkeitsdurchtritt abgedichtet ist. Unter einem radialen Durchtritt kann insbesondere ein Durchtritt durch die Wandung des Durchganges quer zur Längsrichtung des Durchgangs verstanden werden. Zum Abdichten kann beispielsweise zwischen den Flanschelementen untereinander und/oder zwischen den Flanschelementen und dem Verbindungsrohr jeweils zumindest ein Dichtelement vorgesehen sein.

Die Wirksamkeit des Filterelementes kann weiter dadurch erhöht werden, dass zwischen zumindest einem der Flanschelemente und dem Verbindungsrohr ein Dichtelement, insbesondere ein Dichtring, vorgesehen ist. Hierdurch können Übergänge zwischen Flanschelement und Verbindungsrohr abgedichtet werden und ein unerwünschter Durchfluss durch die Wandung des mehrteilig ausgebildeten Durchganges verhindert werden. Das Dichtelement ist geeigneterweise als Elastomerdichtung ausgebildet und vorzugsweise im Verbindungsbereich zwischen benachbarten Elementen vorgesehen.

Beispielsweise kann das Dichtelement am Flanschelement aufgespritzt sein. Dies ist insbesondere dann von Vorteil, wenn das Flanschelement neben dem Dichtelement weitere elastomere Bereiche aufweist. Das Dichtelement kann aber beispielsweise auch in einer korrespondierenden Nut am Flanschelement oder am Verbindungsrohr aufgenommen sein.

Eine besonders hohe Standzeit kann dadurch gegeben sein, dass zumindest ein Filterbereich über ein bevorzugt ringartiges Adapterelement mit dem Durchgang, insbesondere dem Flanschelement, verbunden ist. Hierin kann ein eigenständiger Erfindungsaspekt gesehen werden. Insbesondere kann das Adapterelement flächig und/oder als Tuch, beispielsweise als Gewebe und/oder Folie ausgebildet sein. Gemäß diesem Ausführungsbeispiel ist der Filterbereich nicht unmittelbar mit dem Durchgang verbunden. Vielmehr ist der Filterbereich an einem Adapterelement befestigt, das seinerseits wiederum mit dem Durchgang verbunden ist. Das Adapterelement besteht vorzugsweise aus einem anderen Material verglichen mit dem benachbarten Bereich des Durchgangs. Es kann aber auch eine integrierte Ausführung vorgesehen sein, bei der die Filterbereiche unmittelbar mit den Flanschelementen verbunden sind, wofür insbesondere ein Stoffschluss vorgesehen sein kann.

Nach der Erfindung kann vorgesehen sein, dass zumindest einer der beiden Filterbereiche oder gegebenenfalls das Adapterelement mit dem Durchgang stoffschlüssig verbunden, insbesondere verschweißt und/oder verklebt, ist. Eine Verbindung kann insbesondere durch Laserschweißen und/oder Ultraschallschweißen erzeugt werden. Vorzugsweise kann vorgesehen werden, dass Material des Durchgangs den Filterbereich oder das Adapterelement durchdringt.

Eine besonders zuverlässige Verbindung zwischen Durchgang und Filterbereich ist dadurch gegeben, dass zum Befestigen zumindest eines Filterbereiches und/oder Adapterelementes am Durchgang an diesem zumindest ein Haltedorn vorgesehen ist, der den Filterbereich beziehungsweise das Adapterelement durchsticht. Über diesen Haltedorn wird eine formschlüssige Verbindung zwischen Filterbereich beziehungsweise Adapterelement und Durchgang hergestellt. Dabei ist es vorteilhaft, dass der Haltedorn spitz zuläuft und insbesondere konisch ausgebildet ist. Hierdurch wird das Durchstechen des Filterbereiches bei der Fertigung erleichtert. Soweit der Filterbereich beziehungsweise das Adapterelement ein Gewebe aufweist, ist der Haltedorn geeigneterweise so dimensioniert, dass er das Gewebe durchdringt, aber nicht beschädigt. Hierzu ist es vorteilhaft, dass der Durchmesser des Haltedorns kleiner ist als die Maschenweite des Gewebes. Der Dorn kann aber auch so dimensioniert sein, dass er die Masche des Gewebes, die er durchdringt, aufweitet.

Eine besonders einfach herzustellende und zugleich zuverlässige Befestigung eines Filterbereichs am Durchgang ist dadurch gegeben, dass zumindest eines der Flanschelemente zweiteilig, insbesondere mit einem Haltering und einem Fixierring, ausgebildet ist, und dass insbesondere einer der beiden Filterbereiche und/oder das Adapterelement zwischen den beiden Teilen aufgenommen ist und am Flanschelement befestigt ist. Bei dieser Ausführungsform verläuft das Flanschelement im Bereich der Befestigung auf beiden Flachseiten des Filterbereiches beziehungsweise des Adapterelementes, so dass die Befestigungsmittel durch das Flanschelement geschützt sind. Insbesondere können der Haltering und der Fixierring über den Haltedorn, vorzugsweise stoffschlüssig, verbunden sein.

Die Wirtschaftlichkeit kann erfindungsgemäß dadurch erhöht werden, dass die beiden Flanschelemente baugleich ausgeführt sind. In diesem Fall muss nur ein Typ Flanschelement bevorratet werden.

Es ist vorteilhaft, dass der Durchgang eine Vielzahl von Wandstärkeverjüngungen zur Erhöhung der Flexibilität aufweist. Die Wandstärkeverjüngungen können in einem rohrförmigen Bereich und/oder in einem radialen Bereich des Durchgangs vorgesehen sein. Zusätzlich oder alternativ können zu den Wandstärkeverjüngungen auch Einschnitte vorgesehen sein. Die Wandstärkeverjüngungen erstrecken sich geeigneterweise in Axialrichtung des Durchgangs.

Unter einem Filterbereich kann insbesondere ein Filtertuch, beispielsweise ein Filtergewebe, ein Filtervlies und/oder eine Filtermembran verstanden werden. Die beiden Filterbereiche können getrennt, grundsätzlich aber auch zusammenhängend, insbesondere einstückig, ausgebildet sein. Aufgrund des modularen Aufbaus des Durchganges ist ein Durchführen eines Filterbereiches durch die Durchflussöffnung der Filterpressenplatte bei der Montage des Filterelementes nicht erforderlich. Somit kann beispielsweise vorgesehen sein, ein zusammenhängendes Filtertuch um eine Filterpressenplatte herumzuschlagen, so dass dieses Filtertuch zu beiden Seiten der Filterpressenplatte jeweils einen Filterbereich bildet, wobei die beiden Filterbereiche zusätzlich über den Durchgang miteinander verbunden sind.

Geeigneterweise ist der Durchgang aus einem Kunststoff, insbesondere aus einem Thermoplast, hergestellt. Der erfindungsgemäße Durchgang kann auch als Barrel Neck bezeichnet werden.

Vorteilhaft ist es, dass der Durchgang zwei endseitige Flanschbereiche, an denen die Filterbereiche angeordnet sind, und einen dazwischen liegenden Mittenbereich aufweist, wobei der Durchgang in zumindest einem der Flanschbereiche eine höhere Flexibilität aufweist als im Mittenbereich.

Geeigneterweise ist der Durchgang in den Flanschbereichen, die den Durchgang in der Filterpressenplatte festhalten und die hierzu querschnittsgrößer sind als der Mittenbereich, flexibler als im Mittenbereich, der zur Durchleitung der zu filtrierenden Flüssigkeit dient. Eine Flexibilität ist also gezielt in den Bereichen vorgesehen, die beim Einbau oder Ausbau des Durchgangs in beziehungsweise aus der Filterpressenplatte deformiert werden müssen, wohingegen in Bereichen, in denen keine Deformation erforderlich ist, eine geringere Flexibilität gegeben ist. Hierdurch wird ein einfach zu montierendes und zu demontierendes Filterelement bereitgestellt, das bei hoher Zuverlässigkeit auch bei hohen Betriebsdrücken verwendet werden kann.

Eine bevorzugte Ausführungsform der Erfindung besteht darin, dass der Durchgang im Flanschbereich ein anderes Material aufweist als im Mittenbereich. Gemäß dieser Ausführungsform wird also die unterschiedliche Flexibilität durch eine unterschiedliche Materialzusammensetzung bereitgestellt.

Alternativ oder zusätzlich kann vorgesehen sein, dass zur Erhöhung der Flexibilität im Flanschbereich zumindest ein Filmscharnier vorgesehen ist. In diesem Fall wird die Flexibilitätserhöhung durch eine. Wandstärkenverjüngung zur Verfügung gestellt. Gemäß dieser Ausführungsform kann der Durchgang beispielsweise im Mittenbereich ein Rohrelement aufweisen, an dem stirnseitig im Flanschbereich eine Vielzahl von Laschen vorgesehen sind, die jeweils über ein Filmscharnier zur Bildung eines Flansches abgewinkelt werden können. Das Filmscharnier ermöglicht es dabei, die Laschen beim Durchführen des Durchganges durch die Filterpressenplatte so anzuordnen, dass sie innerhalb des Querschnittes des Rohrelementes liegen und jedenfalls die Bewegung des Rohrelementes durch die Filterpressenplatte nicht behindern. Nach erfolgtem Durchschieben des Durchganges können die Laschen abgewinkelt werden, wodurch der Querschnitt so weit verbreitert wird, dass ein Zurückziehen des Durchganges durch die Filterpressenplatte nicht mehr möglich ist. Zum Sichern der Laschen in der abgewinkelten Position können diese beispielsweise mit einem der Filterbereiche verbunden werden und/oder durch einen Sicherungsring festgelegt werden.

Geeigneterweise sind die Filterbereiche jeweils mit zumindest einem Loch versehen, wobei die Filterbereiche im Bereich des Loches am Durchgang befestigt sind. Bevorzugt sind die Löcher der Filterbereiche fluchtend mit den Durchgangsöffnungen der Flanschelemente angeordnet.

Ein weiterer Aspekt der Erfindung liegt in einem Verfahren zum Filtrieren einer Flüssigkeit, bei dem die Flüssigkeit durch die Filterbereiche eines erfindungsgemäßen Filterelementes geleitet wird.

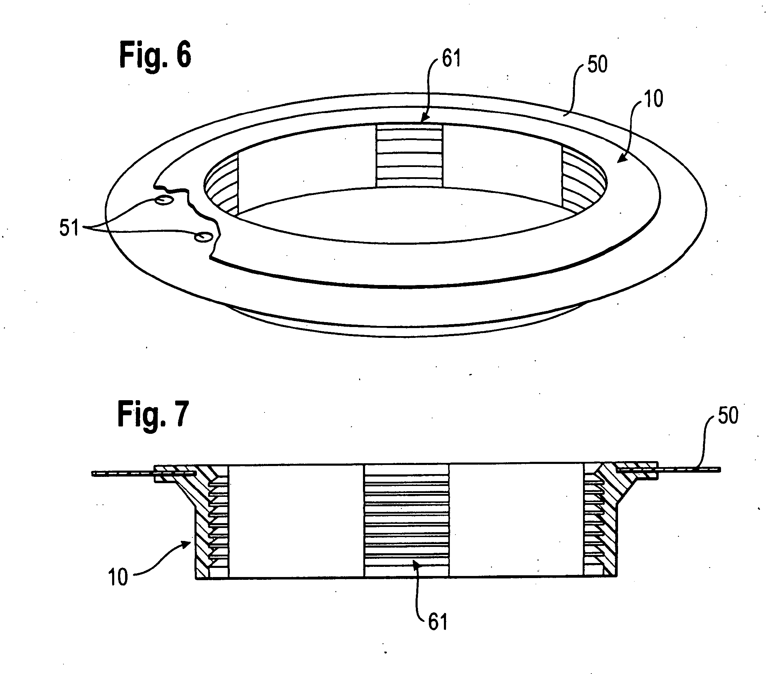

Die Erfindung wird nachfolgend anhand bevorzugter Ausführungsbeispiele näher erläutert, die schematisch in den Figuren dargestellt sind. Hierbei zeigen insbesondere Figuren 6 bis 11 eine erfindungsgemäße Ausführungsform. Die weiteren Figuren zeigen Ausgestaltungsmöglichkeiten der Erfindung oder Alternativlösungen. In den Figuren zeigen:
- Fig. 1: eine perspektivische Ansicht einer ersten Ausführungsform eines Filterelementes;
- Fig. 2: eine Draufsicht des Filterelements der Fig. 1;
- Fig. 3: eine Längsschnittansicht des Filterelements der Fig. 1;
- Fig. 4: eine längsgeschnittene Detailansicht einer weiteren Ausführungsform eines Filterelementes im Bereich des Durchganges;
- Fig. 5: eine weitere Ausführungsform eines Filterelementes in Seitenansicht;
- Figuren 6 bis 11: eine weitere, erfindungsgemäße Ausführungsform eines Filterelementes in verschiedenen Montagestadien an einer Filterpressenplatte;
- Figuren 12 und 13: weitere Ausführungsbeispiele von Filterelementen in längsgeschnittener Detailansicht; und
- Fig. 14: ein weiteres Ausführungsbeispiel eines Durchgangs für ein Filterelement in perspektivischer Ansicht vor dem Zusammenfügen;
- Fig. 15: ein weiteres Ausführungsbeispiel eines Filterelementes in längsgeschnittener Detailansicht;
- Figuren 16 und 17: ein weiteres Ausführungsbeispiel eines Filterelementes in längsgeschnittener Detailansicht vor und nach Befestigung am Filterbereich; und
- Fig. 18: eine Draufsicht auf das Filterelement der Fig. 17.

Gleich oder ähnlich wirkende Elemente sind in allen Figuren mit denselben Bezugszeichen gekennzeichnet.

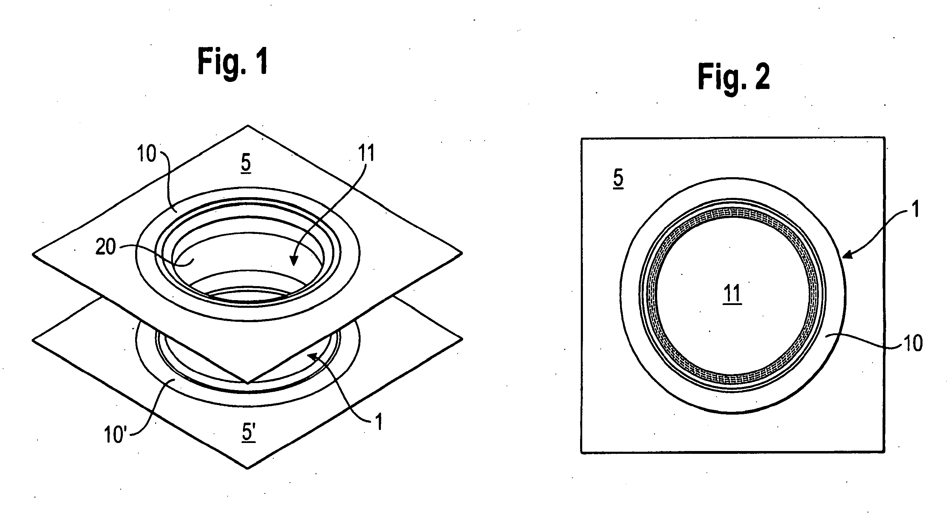

Ein erstes Ausführungsbeispiel eines Filterelementes ist in den Figuren 1 bis 3 dargestellt. Das Filterelement weist zwei als Filtertücher ausgebildete, flächige, etwa parallele Filterbereiche 5, 5' auf, die jeweils mit einem Loch versehen sind. Im Bereich ihrer Lochkante sind die beiden Filterbereiche 5, 5' an einem rohrartigen Durchgang 1 befestigt. Im Durchgang 1 ist ein Durchgangskanal 11 ausgebildet, der sich durch den Durchgang 1 und die Filterbereiche 5, 5' hindurch erstreckt und der zum Durchleiten von Flüssigkeit beim Betrieb einer Filterplattenpresse dient.

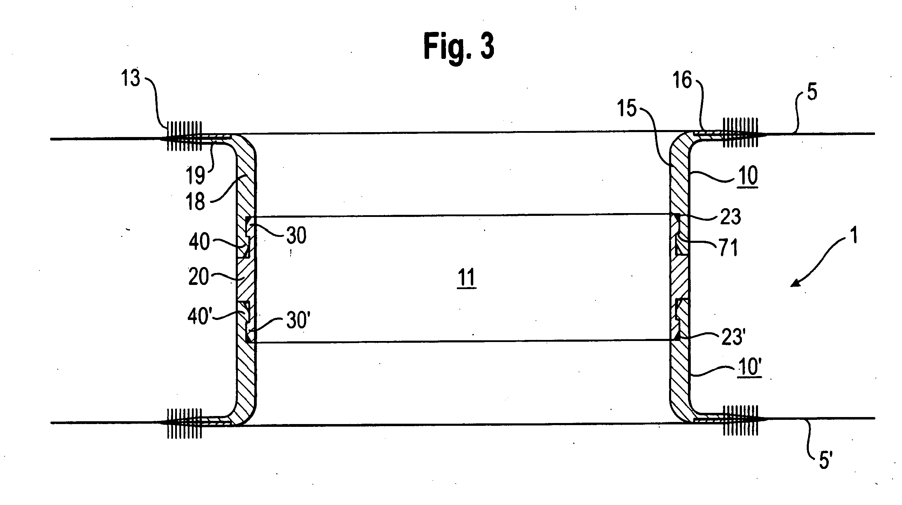

Der Detailaufbau des Durchgangs 1 ist insbesondere in Fig. 1 und 3 dargestellt. Der Durchgang 1 weist zwei separate Flanschelemente 10, 10' auf, wobei der Filterbereich 5 am Flanschelement 10 und der Filterbereich 5' am Flanschelement 10' angeordnet ist. Die beiden Flanschelemente 10, 10' sind baugleich ausgebildet. Aufgrund der baugleichen Ausführung wird im Folgenden nur das Flanschelement 10 näher beschrieben.

Das Flanschelement 10 ist zweiteilig ausgebildet und weist einen Haltering 15 sowie einen scheibenartigen Fixierring 16 auf. Der Haltering 15 besteht dabei aus einem axial verlaufenden, etwa hülsenförmigen Rohrabschnitt 18, an den sich stirnseitig ein radial verlaufender, ringscheibenartiger Flanschabschnitt 19 anschließt. Der Fixierring 16 verläuft ebenfalls radial und liegt dem Flanschabschnitt 19 des Halterings 15 flächig gegenüber. Zwischen Fixierring 16 und dem Flanschabschnitt 19 des Halterings 15 ist der Filterbereich 5 aufgenommen und mittels einer Naht 13 am Haltering 15 und am Fixierring 16 gesichert.

Zwischen den beiden Flanschelementen 10 und 10' ist ein Verbindungsrohr 20 vorgesehen, welches die beiden Flanschelemente 10, 10' verbindet. Das Verbindungsrohr 20 und die Flanschelemente 10, 10' sind dabei mit demselben Innenquerschnitt ausgebildet, so dass im Durchgangskanal 11 beim Übergang zwischen dem Verbindungsrohr 20 und den Flanschelementen 10, 10' keine Querschnittsänderungen auftreten.

Zur Verbindung des Flanschelementes 10 mit dem Verbindungsrohr 20 ist stirnseitig am Verbindungsrohr 20 ein Profilelement 30 vorgesehen, das axial am Verbindungsrohr 20 vorsteht. Ein korrespondierendes Profilelement 40 steht stirnseitig am Rohrabschnitt 18 des Flanschelementes 10 axial hervor. Zwischen den ringförmigen Profilelementen 30 und 40 ist an einer Stufe 71 ein Schnappverschluss gebildet, der das Flanschelement 10 an dem Durchgangskanal 20 fixiert. Analog ausgebildete Profilelemente 30' und 40' sind auf der gegenüberliegenden Stirnseite des Verbindungsrohres 20 beziehungsweise am zweiten Flanschelement 10' vorgesehen. Zum Abdichten der Verbindung zwischen Flanschelement 10 und Verbindungsrohr 20 ist im Bereich der Profilelemente 30 und 40 ein Dichtring 23 vorgesehen. Ein analog ausgebildeter Dichtring 23' ist zwischen dem Verbindungsrohr 20 und dem zweiten Flanschelement 10' angeordnet.

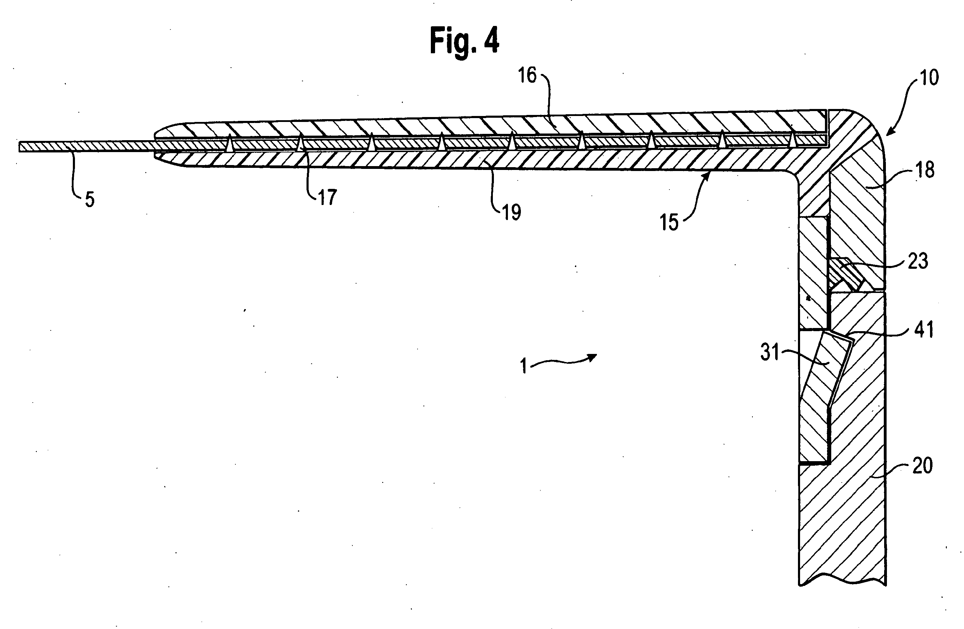

Ein weiteres Ausführungsbeispiel eines Filterelementes mit einem unterschiedlich ausgeführten Durchgang 1 ist in gebrochener Längsschnittansicht in Fig. 4 dargestellt. Beim Ausführungsbeispiel der Fig. 4 ist am hülsenartigen Rohrabschnitt 18 des Halterings 15 ein als radial wirkendes Biegeschnappelement ausgebildetes Profilelement 31 vorgesehen, welches zur Verbindung von Flanschelement 10 und Verbindungsrohr 20 in eine korrespondierende Vertiefung 41 in der radial außen liegenden Wandung des Verbindungsrohres 20 eingreift.

Der Haltering 15 weist in seinem Rohrabschnitt 18 und in seinem Flanschabschnitt 19 unterschiedlich steife Werkstoffe auf. Im Rohrabschnitt 18, insbesondere in seinen Bereichen, in denen die Haltefunktion zum Verbindungsrohr 20 hin hergestellt wird, wird ein vergleichsweise steifer, wenig flexibler Werkstoff verwendet. Im Flanschabschnitt 19 wird hingegen ein vergleichsweise flexibler, verformbarer und wenig steifer Werkstoff verwendet. Insbesondere kann hier ein Elastomer zum Einsatz kommen.

Zwischen Verbindungsrohr 20 und dem Rohrabschnitt 18 des Halterings 15 ist ein Dichtring 23 vorgesehen, der aus demselben Material bestehen kann wie der Flanschabschnitt 19.

Zum Fixieren des Filterbereichs 5 am Flanschelement 10 sind im Flanschabschnitt 19 des Halterings 15 eine Vielzahl von Haltedornen 17 vorgesehen, die den flächigen Filterbereich 5 durchdringen und somit formschlüssig halten. An ihren Spitzen sind die Dorne 17 mit dem Fixierring 16 stoffschlüssig verschweißt. Der Fixierring 16 sichert somit den Filterbereich 5 an den Dornen 17.

Auch der Fixierring 16 weist einen Werkstoff hoher Flexibilität auf. Insbesondere können der Fixierring 16 und/oder der Haltering 15 im Bereich des Flanschabschnitts 19 aus einem thermoplastischen Elastomer ausgeführt sein. Dies ermöglicht es, den Durchgang 1 bei der Demontage des Filterelementes partiell umzuformen.

Als Material für den starren Rohrabschnitt 18 kann beispielsweise Polypropylen mit einer Glasfaserverstärkung zum Einsatz kommen.

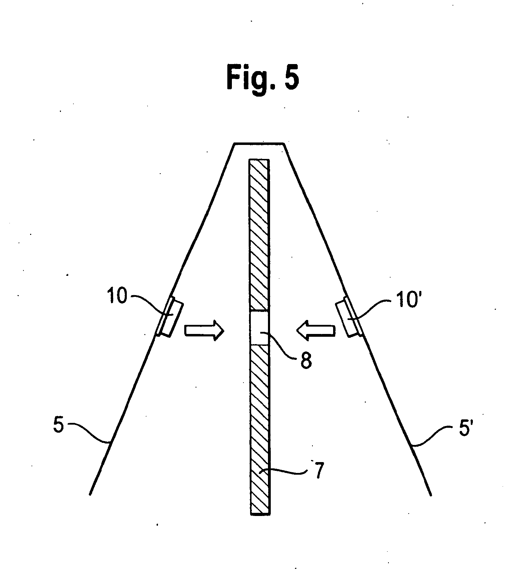

Ein weiteres Ausführungsbeispiel eines Filterelementes bei der Montage an einer Filterpressenplatte 7 ist in Fig. 5 dargestellt. Wie Fig. 5 zu entnehmen ist, können die beiden Filterbereiche 5, 5' an einem einstückigen Filtertuch vorgesehen sein, das um die Filterpressenplatte 7 herumgeschlungen ist.

Wie Fig. 5 ferner zeigt, wird das Filterelement mit getrennten Flanschelementen 10, 10' montiert. Bei der Montage werden die beiden Flanschelemente 10, 10' an einer Durchflussöffnung 8 der Filterpressenplatte 7 miteinander in Kontakt gebracht und mittels in Fig. 5 nicht dargestellten Verbindungsmitteln zum Durchgang zusammengefügt.

Ein Ausführungsbeispiel eines erfindungsgemäßen Filterelementes für eine Filterpressenplatte 7 ist in verschiedenen Montagestadien in den Figuren 6 bis 11 dargestellt.

Fig. 6 zeigt ein Flanschelement 10 des Durchgangs 1 in teilweise geschnittener, perspektivischer Ansicht und Fig. 7 das Flanschelement 10 aus Fig. 6 im Längsschnitt. Wie Figuren 6 und 7 zeigen, ist am Flanschelement 10 ein flächiges, ringförmiges Adapterelement 50 angeordnet. Dieses Adapterelement 50 besteht aus einem anderen Material verglichen mit dem Flanschelement 10 und steht radial über das Flanschelement 10 hervor. Wie im teilweise geschnittenen linken Bereich der Fig. 6 erkennbar ist, sind im Adapterelement 50 Löcher 51 vorgesehen. Durch diese Löcher 51 tritt das Flanschelement 10 hindurch, wodurch eine formschlüssige Verbindung zwischen Flanschelement 10 und Adapterelement 50 gegeben ist.

Das Flanschelement 10 zusammen mit dem Adapterelement 50 kann insbesondere in einem Zweistufen-Spritzgießverfahren hergestellt werden. Hierbei kann das Flanschelement 10 in der zweiten Stufe hergestellt werden, wobei Material des Flanschelementes 10 die Löcher 51 des im ersten Schritt hergestellten Adapterelements 50 durchdringt.

Das Adapterelement 50 kann aus einem Material bestehen, das eine besonders gute Kompatibilität mit dem anzubringenden Filterbereich 5 aufweist. Das Adapterelement 50 kann beispielsweise ein Gewebe, einen Nadelfilz, ein Non-Woven-Gewebe, Papier, welches unter Verwendung kleiner thermoplastischer Fasern, Wärme und Druck hergestellt wird, eine Folie und/oder ein starkes, faserfreies Filmmaterial aufweisen, und kann beispielsweise mit Kunststoff, Gummi und/oder Harz beschichtet sein, um die Qualität der Verbindung mit dem Filterbereich 5 zu erhöhen. Das Adapterelement 50 ist geeigneterweise flexibel ausgebildet.

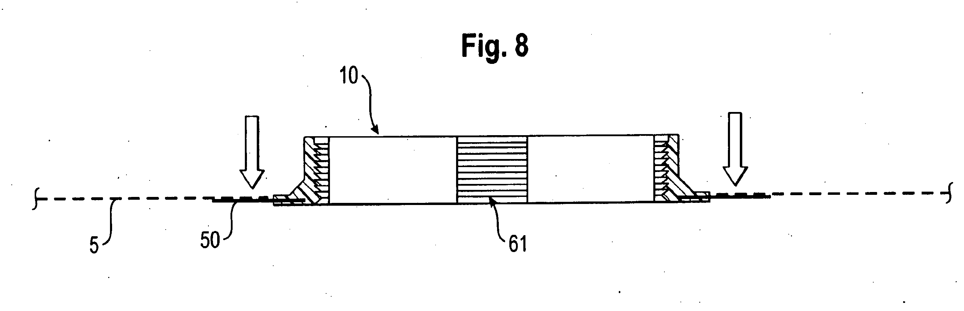

Fig. 8 zeigt einen weiteren Verfahrensschritt bei der Herstellung eines erfindungsgemäßen Filterelementes. Beim Verfahrensschritt der Fig. 8 wird der Filterbereich 5 am Adapterelement 50 angeordnet und mit diesem verbunden. Hierzu kann beispielsweise Ultraschall-, Heißgas-, Heizelement- und/oder Mikrowellenschweißen verwendet werden.

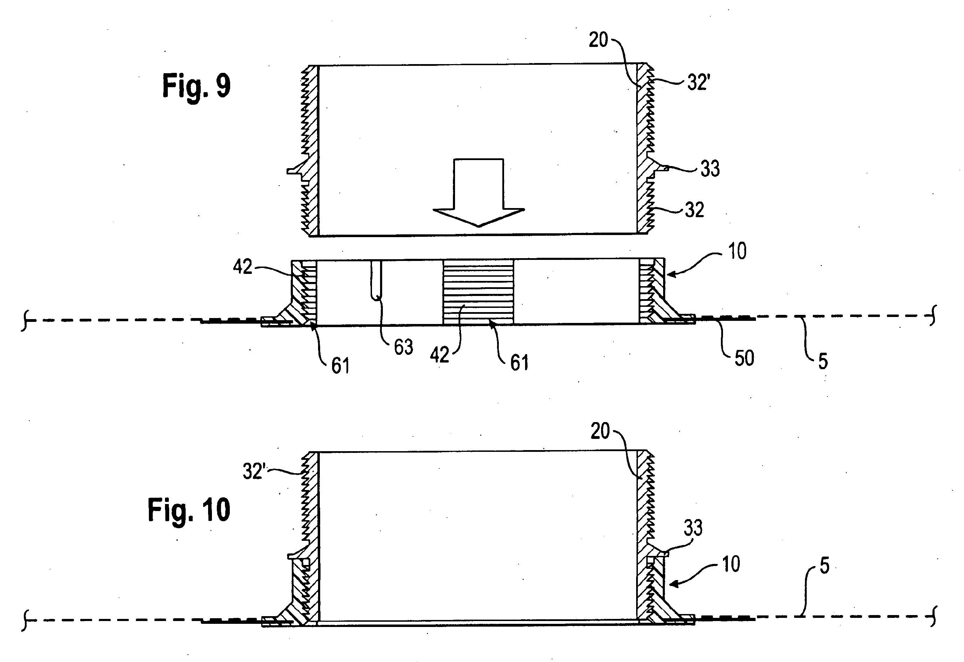

Das weitere Verfahren beim Zusammenfügen des Filterelementes ist in Figuren 9 und 10 dargestellt. Wie in diesen Figuren erkennbar ist, wird ein Verbindungsrohr 20 vorgesehen. An der inneren Mantelfläche des Flanschelementes 10 sind Profilelemente 42 angeordnet. Diese Profilelemente 42 sind in mehreren Segmenten 61 auf der Mantelfläche des Flanschelementes 10 gruppiert. In jedem Segment 61 sind vorzugsweise eine Vielzahl von Profilelementen 42 leitersprossenartig und mit axialem Versatz übereinander angeordnet. Zu den Profilelementen 42 korrespondierende Profilelemente 32 sind an der äußeren Mantelfläche des Verbindungsrohres 20 angeordnet. Auch diese Profilelemente 32 sind in Segmenten angeordnet, wobei auch hier in jedem Segment vorzugsweise eine Vielzahl von Profilelementen leitersprossenartig und mit axialem Versatz übereinander angeordnet sein kann. Grundsätzlich kann in jedem Segment aber auch ein einziges Profilelement 32 beziehungsweise 42 vorgesehen sein. Die Profilelemente 32 und 42 bilden einen Schnappverschluss, der ein Einschieben des Verbindungsrohres 20 in Pfeilrichtung in das Flanschelement 10 ermöglicht, ein anschließendes Herausziehen entgegen der Pfeilrichtung hingegen sperrt. Um einen besonders zuverlässigen und insbesondere dichten Verschluss zu erhalten, kann die Wandstärke des Verbindungsrohres 20 im Bereich des mindestens einen Profilelementes 32 und/oder die Wandstärke des Flanschelementes 10 im Bereich des mindestens einen Profilelementes 42 reduziert sein.

Wie beispielhaft in Figur 9 gezeigt ist, ist am Flanschelement 10 ein als Axialsteg ausgebildetes Positionierelement 63 vorgesehen. Dieses greift beim Zusammenschieben in eine nicht dargestellte korrespondierende Axialnut am Verbindungsrohr 20 ein und stellt dabei eine definierte Drehposition des Flanschelementes 10 bezüglich dem Verbindungsrohr 20 sicher.

Wie den Figuren 9 und 10 ferner zu entnehmen ist, ist außenseitig am Verbindungsrohr 20 ferner ein Anschlagring 33 vorgesehen, der das axiale Einschieben des Verbindungsrohres 20 in das Flanschelement 10 begrenzt.

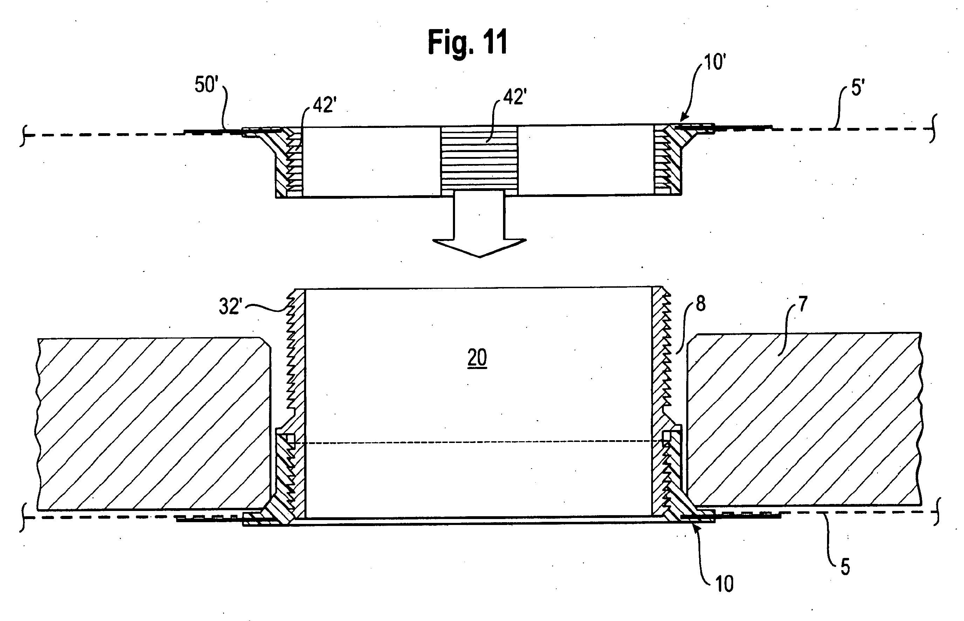

Wie die Figuren 9 und 10 darüber hinaus zeigen, sind auf der den Profilelementen 32 abgewandten Seite des Anschlagrings 33 an der Mantelfläche des Verbindungsrohres 20 eine Vielzahl weiterer axial versetzter Profilelemente 32' vorgesehen. Diese weiteren Profilelemente 32'korrespondieren mit Profilelementen 42'in dem in Fig. 11 gezeigten zweiten Flanschelement 10'. Die korrespondierenden Profilelemente 32', 42' erlauben dabei ein axiales Aufstecken des Flanschelementes 10' in der in Fig. 11 gezeigten Pfeilrichtung und sperren eine entgegengesetzte Bewegung. Die Profilelemente 32', 42' sind geeigneterweise analog zu den Profilelemente 32, 42 ausgebildet und insbesondere in Segmenten gruppiert.

Auch am Flanschelement 10' ist ein, nicht dargestelltes und als Axialsteg ausgebildetes Positionierelement vorgesehen, das beim Zusammenschieben in eine nicht dargestellte korrespondierende Axialnut im Verbindungsrohr 20 eingreift und dabei eine definierte Drehposition des Flanschelementes 10' bezüglich dem Verbindungsrohr 20 sicherstellt.

Wie Fig. 11 zu entnehmen ist, wird zum abschließenden Zusammenfügen des Filterelementes das erste Flanschelement 10 mitsamt dem Verbindungsrohr 20 durch die Durchflussöffnung 8 in der Filterpressenplatte 7 durchgeführt, wobei der Filterbereich 5 auf der Filterpressenplatte 7 zur Anlage kommt. Anschließend wird das Flanschelement 10' auf der dem Filterbereich 5 abgewandten Seite der Filterpressenplatte 7 auf das Verbindungsrohr 20 aufgesteckt, wobei auch der Filterbereich 5' an der Filterpressenplatte 7 zur Anlage kommt und die beiden Flanschelemente 10, 10' mit dem Verbindungsrohr 20 zum fertigen Durchgang 1 zusammengefügt werden. Die Profilelemente 32, 32', 42, 42' verhindern ein anschließendes Abziehen der Flanschelemente 10, 10' vom Verbindungsrohr 20. Soweit das Verbindungsrohr 20 nach dem Anbringen des Flanschelementes 10' über das Flanschelement 10' übersteht, kann das Verbindungsrohr 20, beispielsweise durch Abschneiden, gekürzt werden.

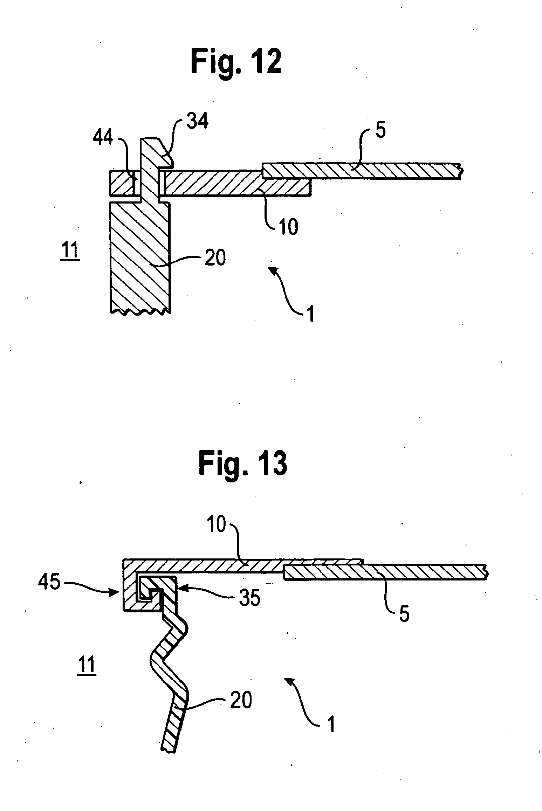

Ein weiteres Ausführungsbeispiel eines Filterelementes ist in Fig. 12 im Teillängsschnitt dargestellt. Beim Ausführungsbeispiel der Fig. 12 ist ein scheibenartiges Flanschelement 10 vorgesehen. In diesem scheibenartigen Flanschelement 10 ist eine Ausnehmung 44 angeordnet. Durch diese steht ein hakenartiges Profilelement 34 der Verschlusseinrichtung hindurch, das stirnseitig am Verbindungsrohr 20 angeordnet ist. Dieses hakenartige Profilelement 34 hält das Flanschelement 10 am Verbindungsrohr 20.

Ein weiteres Ausführungsbeispiel eines Filterelementes ist in Fig. 13 in Teillängsschnittansicht dargestellt. Nach dem Ausführungsbeispiel der Fig. 13 ist das Flanschelement 10 etwa scheibenartig ausgebildet. Zum Verbinden des Verbindungsrohres 20 mit dem Flanschelement 10 ist stirnseitig am Verbindungsrohr 20 ein U-förmiges Profilelement 35 vorgesehen. Ein korrespondierendes U-förmiges Profilelement 45 ist radial innen liegend am ringscheibenartigen Flanschelement 10 angeordnet.

Beim Ausführungsbeispiel der Fig. 13 ist das Verbindungsrohr 20 längenveränderlich vorgesehen. Hierzu ist dieses aus einem flexiblen Material gefertigt und balgartig ausgeführt. Aufgrund der veränderlichen Länge kann das Filterelement an verschiedene Filterplattendicken angepasst werden.

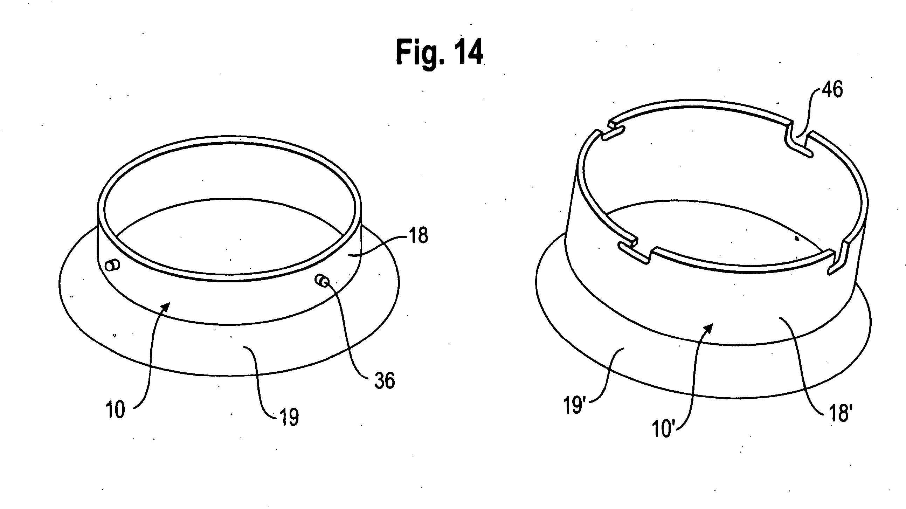

Ein weiteres Ausführungsbeispiel eines Durchgangs für ein Filterelement vor der Montage der beiden Flanschelemente 10, 10' ist in Fig. 14 dargestellt. Beim Ausführungsbeispiel der Fig. 14 ist zur Verbindung der beiden Flanschelemente 10, 10' ein Bajonettverschluss vorgesehen. Zur Bildung des Bajonettverschlusses weisen die Verbindungsmittel zylindrische Profilelemente 36 auf, die radial am Rohrabschnitt 18 des Flanschelementes 10 vorstehen. Stirnseitig am Rohrabschnitt 18'des zweiten Flanschelementes 10' sind korrespondierende Aufnahmen 46 für die Profilelemente 36 vorgesehen. Diese Aufnahmen 46 sind als L-förmige Einschnitte im Rohrabschnitt 18' ausgebildet und erlauben eine Fixierung des Flanschelementes 10 am Flanschelement 10' durch axiales Einführen des Flanschelementes 10 in das Flanschelement 10' und anschließende relative Verdrehung.

Die Flanschabschnitte der Flanschelemente 10 und 10' sind mit den Bezugszeichen 19 bzw. 19' gekennzeichnet.

Insbesondere der Rohrabschnitt 18 bzw. 18' der Flanschelemente 10, 10' kann beispielsweise aus rostfreiem Stahl ausgeführt sein. Vorzugsweise ist jedoch für die Flanschelemente 10, 10', insbesondere für deren Rohrabschnitte 18 bzw. 18', ein Bikomponenten-Kunststoff, insbesondere ein TPE-Kunststoff, vorgesehen.

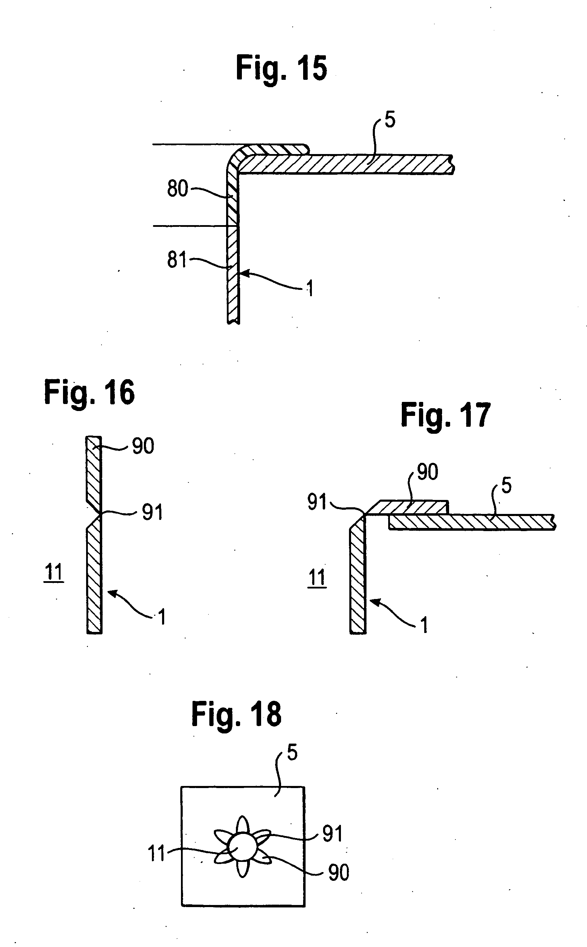

Ein weiteres Ausführungsbeispiel eines erfindungsgemäßen Filterelementes ist in einer Teilschnittansicht in Fig. 15 dargestellt. Beim Ausführungsbeispiel der Fig. 15 weist der Durchgang 1 einen Flanschbereich 80 auf, an dem der Filterbereich 5 angeordnet ist, sowie einen hülsenartigen Mittenbereich 81, der sich an den Flanschbereich 80 anschließt. Um einen Durchgang des Flanschbereichs 80 durch eine in der Fig. 15 nicht dargestellte Durchflussöffnung einer Filterplatte zu erlauben, ist der Durchgang 1 im Flanschbereich 80 mit einem flexibleren Material gefertigt als im Mittenbereich 81, so dass der Flanschbereich 80 deformiert werden kann.

Ein weiteres Ausführungsbeispiel eines erfindungsgemäßen Filterelementes ist in den Figuren 16 bis 18 dargestellt. Fig. 16 zeigt dabei in geschnittener Teilansicht den Durchgang 1 des Filterelementes vor der Befestigung des Filterbereiches 5 und Fig. 17 nach Befestigung des Filterbereichs 5. Fig. 18 zeigt eine Draufsicht des Filterelementes nach Befestigung des Filterbereichs 5.

Wie insbesondere den Figuren 16 und 17 zu entnehmen ist, sind stirnseitig am röhrenartigen Durchgang 1, der den Durchgangskanal 11 umschließt, Laschen 90 vorgesehen, die über jeweils ein Filmscharnier 91 am Durchgang 1 angelenkt sind. Zum Durchführen des Durchgangs durch die in den Figuren 16 bis 18 nicht dargestellte Durchflussöffnung der Filterpressenplatte können die Laschen 90 in die in Fig. 16 dargestellte fluchtende Position gebracht werden, in der sie den Durchtritt des Durchgangs 1 nicht behindern. Ist der Durchgang 1 durch die Durchflussöffnung hindurchgeschoben, können die Laschen 90, wie in den Figuren 17 und 18 gezeigt, umgelegt werden und mit dem Filterbereich 5 verbunden werden.

## Patentansprüche

1. Filterelement für eine Filterpressenplatte (7), mit
- zwei Filterbereichen (5, 5'),
- einem Durchgang (1) zum Durchleiten einer zu filtrierenden Flüssigkeit, über den die beiden Filterbereiche (5, 5') miteinander verbunden sind, wobei der Durchgang (1) modular mit zumindest zwei separaten Flanschelementen (10, 10') ausgebildet ist, wobei jedes der Flanschelemente (10, 10') eine Durchgangsöffnung für die zu filtrierende Flüssigkeit aufweist und wobei an den Flanschelementen (10, 10') jeweils einer der beiden Filterbereiche (5, 5') angeordnet ist, und
- Verbindungsmitteln, mit welchen die beiden Flanschelemente (10, 10') bei fluchtenden Durchgangsöffnungen miteinander verbunden sind, wobei die Verbindungsmittel ein Verbindungsrohr (20) aufweisen,
**dadurch gekennzeichnet,**
- **dass** zum Bilden eines Schnappverschlusses als Schnappelemente eine Vielzahl von axial versetzten ringförmigen Profilelementen (32, 42) vorgesehen sind,
- **dass** die ringförmigen Profilelemente (32, 42) radial innen an den Flanschelementen (10, 10') und radial außen am Verbindungsrohr (20) angeordnet sind,
- **dass** außenseitig am Verbindungsrohr (20) ein Anschlagring (33) vorgesehen ist, durch den eine Relativbewegung eines Flanschelementes (10) beim Zusammenschieben bezüglich dem Verbindungsrohr (20) begrenzt ist, und
- **dass** an der Mantelfläche des Verbindungsrohres (20) Profilelemente (32, 32') zu beiden Seiten des Anschlagringes (33) vorgesehen sind.

2. Filterelement nach Anspruch 1,
**dadurch gekennzeichnet,**
**dass** die Verbindungsmittel so ausgebildet, dass die beiden Flanschelemente (10, 10'), insbesondere in einer definierten Drehposition, drehfest miteinander verbunden sind.

3. Filterelement nach einem der Ansprüche 1 oder 2,
**dadurch gekennzeichnet**
**dass** Innenwände der Flanschelemente (10, 10') bereichsweise mit einer Innenwand des Verbindungsrohrs (20) fluchten.

4. Filterelement nach einem der vorstehenden Ansprüche,
**dadurch gekennzeichnet,**
**dass** der Durchgang (1) gegen einen radialen Flüssigkeitsdurchtritt abgedichtet ist.

5. Filterelement nach einem der vorstehenden Ansprüche,
**dadurch gekennzeichnet,**
**dass** zwischen zumindest einem der Flanschelemente (10, 10') und dem Verbindungsrohr (20) ein Dichtelement, insbesondere ein Dichtring (23), vorgesehen ist.

6. Filterelement nach einem der vorstehenden Ansprüche,
**dadurch gekennzeichnet,**
**dass** zumindest ein Filterbereich (5, 5') über ein bevorzugt ringartiges Adapterelement (50, 50') mit dem Durchgang (1) verbunden ist.

7. Filterelement nach einem der vorstehenden Ansprüche,
**dadurch gekennzeichnet,**
**dass** zum Befestigen zumindest eines Filterbereichs (5, 5') und/oder Adapterelements (50, 50') am Durchgang (1) an diesem zumindest ein Haltedorn (17) vorgesehen ist, der den Filterbereich (5, 5') beziehungsweise das Adapterelement (50, 50') durchsticht.

8. Filterelement nach einem der vorstehenden Ansprüche,
**dadurch gekennzeichnet,**
**dass** zumindest eines der Flanschelemente (10, 10') zweiteilig, insbesondere mit einem Haltering (15) und einem Fixierring (16), ausgebildet ist, und dass insbesondere einer der beiden Filterbereiche (5, 5') und/oder das Adapterelement zwischen den beiden Teilen aufgenommen ist und am Flanschelement (10, 10') befestigt ist.

9. Filterelement nach einem der vorstehenden Ansprüche,
**dadurch gekennzeichnet,**
**dass** die beiden Flanschelemente (10, 10') baugleich ausgeführt sind.

10. Filterelement nach einem der vorstehenden Ansprüche,
**dadurch gekennzeichnet,**
**dass** der Durchgang (1) eine Vielzahl von Wandstärkeverjüngungen zur Erhöhung der Flexibilität aufweist.

11. Filterelement für eine Filterpressenplatte (7) nach einem der vorstehenden Ansprüche,
**dadurch gekennzeichnet,**
- **dass** der Durchgang (1) zwei endseitige Flanschbereiche (80), an denen die Filterbereiche (5, 5') angeordnet sind, und einen dazwischen liegenden Mittenbereich (81) aufweist, wobei der Durchgang (1) in zumindest einem der Flanschbereiche (80) eine höhere Flexibilität aufweist als im Mittenbereich (81).

12. Filterelement nach Anspruch 11,
**dadurch gekennzeichnet,**
**dass** der Durchgang (1) im Flanschbereich (80) ein anderes Material aufweist als im Mittenbereich (81).

13. Filterelement nach einem der Ansprüche 11 oder 12,
**dadurch gekennzeichnet,**
**dass** zur Erhöhung der Flexibilität im Flanschbereich (80) zumindest ein Filmscharnier (91) vorgesehen ist.

14. Verfahren zum Filtrieren einer Flüssigkeit,
**dadurch gekennzeichnet**
**dass** die Flüssigkeit durch die Filterbereiche (5, 5') eines Filterelementes nach einem der vorstehenden Ansprüche geleitet wird.

## Claims

1. Filter element for a filter press plate (7) having
- two filter areas (5, 5'),
- a passage (1) for passing through a liquid to be filtered and by means of which the two filter areas (5, 5') are interconnected, wherein the passage (1) is constructed in modular manner with at least two separate flange elements (10, 10'), each of said flange elements (10, 10') having a passage opening for the liquid to be filtered and wherein one of the two filter areas (5, 5') is positioned on each of the flange elements (10, 10'), and
- connecting means with which the two flange elements (10, 10') are interconnected with the passage openings being aligned, the connecting means having a connecting tube (20),
**characterized in that**
- for forming a snap closure, a plurality of axially displaced ring-shaped profile elements (32, 42) is provided as snap elements,
- the ring-shaped profile elements (32, 42) are positioned radially inwardly on the flange elements (10, 10') and radially outwardly on the connecting tube (20),
- a stop ring (33) is provided externally on the connecting tube (20), which limits, on pushing together, a relative movement of a flange element (10) relative to the connecting tube (20), and
- on the lateral surface of the connecting tube (20), profile elements (32, 32') are provided on both sides of the stop ring (33).

2. Filter element according to claim 1, **characterized in that** the connecting means are constructed in such a way that the two flange elements (10, 10'), particularly in a clearly defined rotary position, are interconnected to rotate.

3. Filter element according to one of the claims 1 or 2, **characterized in that** the inner walls of the flange elements (10, 10') are zonally aligned with an inner wall of the connecting tube (20).

4. Filter element according to one of the preceding claims, **characterized in that** the passage (1) is sealed against a radial liquid passage.

5. Filter element according to one of the preceding claims, **characterized in that** a sealing element, particularly a sealing ring (23), is provided between at least one of the flange elements (10, 10') and the connecting tube (20).

6. Filter element according to one of the preceding claims, **characterized in that** at least one filter area (5, 5') is connected to the passage (1) via a preferably ring-like adapter element (50, 50').

7. Filter element according to one of the preceding claims, **characterized in that** for fixing at least one filter area (5, 5') and/or adapter element (50, 50') on the passage (1) on the latter is provided at least one retaining spike (17), which perforates the filter area (5, 5') or the adapter element (50, 50'), respectively.

8. Filter element according to one of the preceding claims, **characterized in that** at least one of the flange elements (10, 10') is constructed in two parts, particularly with a retaining ring (15) and a fixing ring (16), and that in particular one of the two filter areas (5, 5') and/or the adapter element is received between the two parts and fixed to the flange element (10, 10').

9. Filter element according to one of the preceding claims, **characterized in that** both flange elements (10, 10') have an identical construction.

10. Filter element according to one of the preceding claims, **characterized in that** the passage (1) has a plurality of wall thickness reductions for increasing flexibility.

11. Filter element for a filter press plate (7) according to one of the preceding claims, **characterized in that**
- the passage (1) has two terminal flange areas (80) on which are located the filter areas (5, 5'), and an intermediate central area (81), wherein at least in one of the flange areas (80) the passage (1) has a greater flexibility than in the central area (81).

12. Filter element according to claim 11, **characterized in that** the passage (1) in the flange area (80) is of different material to that in the central area (81).

13. Filter element according to one of the claims 11 or 12, **characterized in that** at least one film hinge (91) is provided for increasing flexibility in the flange area (80).

14. Process for filtering a liquid, **characterized in that** the liquid is passed through the filter areas (5, 5') of a filter element according to one of the preceding claims.

## Revendications

1. Élément filtrant pour un plateau (7) de filtre-presse avec
- deux zones filtrantes (5, 5'),
- un passage (1) pour faire passer un liquide à filtrer, par lequel les deux zones filtrantes (5, 5') sont reliées l'une à l'autre, le passage (1) étant réalisé modulaire avec au moins deux éléments de bride séparés (10, 10'), chacun des éléments de bride (10, 10') comportant une ouverture de passage pour le liquide à filtrer et sur les éléments de bride (10, 10') étant placée l'une respective des deux zones filtrantes (5, 5'), et
- des moyens de liaison avec lesquels les deux éléments de bride (10, 10') communiquent entre eux quand les ouvertures de passage sont alignées, les moyens de liaison comprenant un tube de liaison (20),
***caractérisé***
- ***en ce que*** pour former une fermeture à déclic, il est prévu comme élément à déclic une pluralité d'éléments profilés annulaires (32, 42) décalés axialement,
- ***en ce que*** les éléments profilés annulaires (32, 42) sont placés à l'intérieur radialement sur les éléments de bride (10, 10') et à l'extérieur radialement sur le tube de liaison (20),
- ***en ce qu'***à l'extérieur sur le tube de liaison (20) est prévue une bague de butée (33) grâce à laquelle un mouvement relatif d'un élément de bride (10) est limité lors d'une rentrée par rapport au tube de liaison (20), et
- ***en ce que**,* sur la surface d'enveloppe du tube de liaison (20), sont prévus des éléments profilés (32, 32') des deux côtés de la bague de butée (33).

2. Élément filtrant selon la revendication 1, ***caractérisé en ce que*** les moyens de liaison sont conformés de telle sorte que les deux éléments de bride (10, 10') sont reliés l'un à l'autre de manière fixe en rotation, en particulier dans une position de rotation définie.

3. Élément filtrant selon l'une quelconque des revendications 1 ou 2, ***caractérisé en ce que*** les parois intérieures des éléments de bride (10, 10') sont alignées par endroits avec une paroi intérieure du tube de liaison (20).

4. Élément filtrant selon l'une quelconque des revendications précédentes, ***caractérisé en ce que*** le passage (1) est hermétique à un passage radial du liquide.

5. Élément filtrant selon l'une quelconque des revendications précédentes, ***caractérisé en ce qu*'**entre au moins l'un des éléments de bride (10, 10') et le tube de liaison (20) est prévu un élément d'étanchéité, en particulier une bague d'étanchéité (23).

6. Élément filtrant selon l'une quelconque des revendications précédentes, ***caractérisé en ce qu*'**au moins une zone filtrante (5, 5') est reliée au passage (1) par l'intermédiaire d'un élément adaptateur (50, 50') de préférence de type annulaire.

7. Élément filtrant selon l'une quelconque des revendications précédentes, ***caractérisé en ce que***, pour fixer au moins une zone filtrante (5, 5') et/ou un élément adaptateur (50, 50') sur le passage (1), il est prévu sur celui-ci au moins un ergot de maintien (17) qui traverse la zone filtrante (5, 5') ou l'élément adaptateur (50, 50').

8. Élément filtrant selon l'une quelconque des revendications précédentes, ***caractérisé en ce qu*'**au moins l'un des éléments de bride (10, 110') est réalisé en deux parties, en particulier avec une bague de maintien (15) et une bague de fixation (16), et *en ce qu*'en particulier l'une des deux zones filtrantes (5, 5') et/ou l'élément adaptateur est logé(e) entre les deux parties et fixé(e) sur l'élément de bride (10, 10').

9. Élément filtrant selon l'une quelconque des revendications précédentes, ***caractérisé en ce que*** les deux éléments de bride (10, 10') sont de même construction.

10. Élément filtrant selon l'une quelconque des revendications précédentes, ***caractérisé en ce que*** le passage (1) comporte une pluralité d'effilements d'épaisseur de paroi pour augmenter la flexibilité.

11. Élément filtrant pour un plateau de filtre-presse (7) selon l'une quelconque des revendications précédentes, ***caractérisé***
- ***en ce que*** le passage (1) comporte deux zones de bride (80) côté extrémité sur lesquelles sont placées les zones filtrantes (5, 5'), et une zone médiane (81) située entre elles, le passage (1) présentant dans au moins l'une des zones de bride (80) une flexibilité plus grande que dans la zone médiane (81).

12. Élément filtrant selon la revendication 11, ***caractérisé en ce que*** le passage (1) comporte dans la zone de bride (80) un autre matériau que dans la zone médiane (81).

13. Élément filtrant selon l'une quelconque des revendications 11 ou 12, ***caractérisé en ce que****,* pour augmenter la flexibilité dans la zone de bride (80), il est prévu au moins une charnière à film (91).

14. Procédé de filtration d'un liquide, ***caractérisé en ce que*** le liquide est envoyé à travers les zones filtrantes (5, 5') d'un élément filtrant selon l'une quelconque des revendications précédentes.
